# EUROPEAN PATENT APPLICATION

(11) **EP 4 794 043 A1**
(43) Date of publication of application: **19.08.2026**
(21) Application number: 24941029.1
(22) Date of filing: 29.05.2024
(51) Int. Cl.: H01M 10/0525, H01M 50/46

(54) **ELECTROCHEMICAL APPARATUS AND ELECTRIC DEVICE**

(71) Applicant: Ningde Amperex Technology Limited, Ningde, Fujian 352100 (CN)
(72) Inventor: CHEN, Tengteng, Ningde, Fujian 352100 (CN); DENG, Daolin, Ningde, Fujian 352100 (CN); CHEN, Wen, Ningde, Fujian 352100 (CN)
(74) Representative: Dehns Germany Partnerschaft mbB
(86) International application number: PCT/CN2024/095873
(87) International publication number: WO 2025/245711

(57) **Abstract**

This application discloses an electrochemical apparatus and an electric device, and the electrochemical apparatus includes a housing, an electrode assembly, a first adhesive member, and a second adhesive member. A first sidewall of the housing includes an internal first surface and an external second surface opposite to each other along a first direction. The electrode assembly is disposed within the housing, and the electrode assembly includes a first side surface. The first adhesive member includes a first side portion and a second side portion opposite each other, where the first side portion includes a first adhesive region bonded to the first surface, and the second side portion includes a second adhesive region, a first non-adhesive region, and a third adhesive region sequentially arranged along a second direction, and the second adhesive region and the third adhesive region are bonded to the first side surface. Along the first direction, a projection of the first non-adhesive region overlaps with a projection of the first adhesive region. The second surface is bonded to an external structure through the second adhesive member. This application is conducive to suppressing impact on corners of the housing, and facilitates reducing the risk of damage to electrode plates of the electrode assembly.

## Description

### TECHNICAL FIELD

This application relates to the field of energy storage technologies, and in particular, to an electrochemical apparatus and an electric device.

### BACKGROUND

When installing electrochemical apparatuses such as batteries in a battery compartment of an electric device, the battery is bonded to the battery compartment to enhance installation stability. To address issues such as internal short circuits or top seal rupture caused by movement of the internal electrode assembly during a drop, the electrode assembly is bonded to the housing of the battery to suppress the movement of the electrode assembly.

However, when the electric device is subjected to impact, the battery as a whole is prone to movement due to the impact, and the electrode assembly inside the battery is also prone to movement relative to the housing of the battery, leading to potential damage to the housing of the battery and the electrode plates of the electrode assembly.

### SUMMARY

The inventors of this application have found that if the adhesive for bonding the electrode assembly to the housing and the adhesive bonding the housing to an external structure such as a battery compartment are disposed on the same side of the electrode assembly, it is conducive to reducing the overall movement of the battery. However, the electrode plates of the electrode assembly are prone to damage. If the adhesive for bonding the electrode assembly to the housing and the adhesive bonding the housing to the external structure such as the battery compartment are disposed on different sides of the electrode assembly, it is conducive to reducing the risk of damage to the electrode plates of the electrode assembly. However, the overall movement of the battery increases.

In view of this, this application provides an electrochemical apparatus and an electric device aimed at suppressing the overall movement of the battery and the movement of the electrode assembly relative to the housing, reducing the risk of damage to the housing and the outer foil of the electrode assembly, and improving the safety and reliability of the electrochemical apparatus.

A first aspect of this application provides an electrochemical apparatus, and the electrochemical apparatus includes a housing including a first sidewall, the first sidewall including a first surface and a second surface opposite each other along a first direction, where the first surface is located inside the housing, and the second surface is located outside the housing. An electrode assembly is disposed within the housing, the electrode assembly including a first side surface adjacent to the first surface. A first adhesive member is located between the housing and the electrode assembly, the first adhesive member including a first side portion and a second side portion opposite each other. The first side portion includes a first adhesive region bonded to the first surface, and the second side portion includes a second adhesive region, a first non-adhesive region, and a third adhesive region sequentially arranged along a second direction, where the second adhesive region and the third adhesive region are bonded to the first side surface, and the second direction are perpendicular to the first direction. Along the first direction, a projection of the first non-adhesive region overlaps with a projection of the first adhesive region. A second adhesive member is bonded to the second surface, and the second adhesive member is configured to bond to an external structure.

In this application, the first adhesive region of the first adhesive member is bonded to the first surface, and the second adhesive member is bonded to the second surface, so that both the first adhesive member and the second adhesive member are located on one side of the electrode assembly along the first direction, which facilitates suppressing the overall movement of the electrochemical apparatus relative to the external structure. The projection of the first non-adhesive region along the first direction overlaps with the projection of the first adhesive region along the first direction, which facilitates reducing the impact force transmitted by the adhesive member to the electrode assembly when the electrochemical apparatus is subjected to impact, thereby facilitating reducing the risk of damage to the outer electrode plates of the electrode assembly.

In one or more embodiments of this application, the first side portion further includes a second non-adhesive region and a third non-adhesive region, and along the second direction, the first adhesive region is located between the second non-adhesive region and the third non-adhesive region. Along the first direction, a projection of the second non-adhesive region overlaps with the second adhesive region, and a projection of the third non-adhesive region overlaps with the third adhesive region. This arrangement reduces the pulling force of the first adhesive member on the first side surface when the electrochemical apparatus is subjected to impact, thereby reducing the risk of damage to the outer electrode plates of the electrode assembly.

In one or more embodiments of this application, along the first direction, the projection of the first non-adhesive region covers the projection of the first adhesive region, the projection of the second non-adhesive region covers the second adhesive region, and the projection of the third non-adhesive region covers the third adhesive region. Along the second direction, a distance between the first adhesive region and the second adhesive region is greater than 0, and a distance between the first adhesive region and the third adhesive region is greater than 0. This arrangement allows a portion of the first adhesive member to be neither bonded to the first surface nor to the first side surface, so that when the electrochemical apparatus is subjected to impact, the force transmitted from the housing to the electrode assembly is dissipated and absorbed through deformation of the portion of the first adhesive member. This not only facilitates suppressing relative movement between the electrode assembly and the housing, but also further reduces the force transmitted by the first adhesive member to the first side surface, thereby facilitating reducing the risk of damage to the outer electrode plates of the electrode assembly.

In one or more embodiments of this application, the electrochemical apparatus further includes a first tab and a second tab having opposite polarities, and the first tab and the second tab are connected to the electrode assembly and extend out of the housing along the second direction. This arrangement facilitates suppressing the movement of the electrode assembly relative to the housing along the second direction when the electrochemical apparatus is subjected to impact and reducing the impact on the corners of the housing and the impact on the electrode assembly close to a head portion and a tail portion, thereby facilitating reducing the risk of damage to the housing and short circuits in the electrochemical apparatus.

In one or more embodiments of this application, along the second direction, a length of the electrode assembly is L, and along a third direction, a width of the electrode assembly is W; the first direction, the second direction, and the third direction are perpendicular to each other, W < L, and 30 mm ≤ L ≤ 150 mm, 25 mm ≤ W ≤ 100 mm. This arrangement facilitates increasing an area of the electrode assembly available for bonding to the first adhesive member and also providing an area corresponding to the first non-adhesive region. It is conducive to distributing the pulling force of the first adhesive member on the electrode assembly, thereby facilitating reducing the risk of damage to the outer electrode plates of the electrode assembly.

In one or more embodiments of this application, the distance between the first adhesive region and the second adhesive region is D₁, and 0.5 mm ≤ D₁ ≤ 14 mm. This ensures that the offset distance between the first adhesive region and the second adhesive region is not too long, facilitating suppressing the movement of the electrode assembly relative to the housing. This also ensures that the offset distance between the first adhesive region and the second adhesive region is not too short, facilitating reducing the pulling force transmitted by the first adhesive member to the electrode assembly, thereby facilitating reducing the risk of damage to the outer electrode plates of the electrode assembly.

In one or more embodiments of this application, along the second direction, the distance between the first adhesive region and the third adhesive region is D₂, and 0.5 mm ≤ D₂ ≤ 14 mm. This ensures that the offset distance between the first adhesive region and the third adhesive region is not too long, facilitating suppressing the movement of the electrode assembly relative to the housing. This also ensures that the offset distance between the first adhesive region and the third adhesive region is not too short, facilitating reducing the pulling force transmitted by the first adhesive member to the electrode assembly, thereby facilitating reducing the risk of damage to the outer electrode plates of the electrode assembly.

In one or more embodiments of this application, along the first direction, the projection of the first adhesive member overlaps with the projection of the second adhesive member, which facilitates suppressing the movement of the electrode assembly when the electrochemical apparatus is subjected to impact.

In one or more embodiments of this application, along the first direction, the projection of the second adhesive member covers the projection of the first adhesive member, which facilitates increasing an area of an overlapping region between the projection of the first adhesive member and the projection of the second adhesive member, further facilitating suppressing the movement of the electrode assembly when the electrochemical apparatus is subjected to impact.

In one or more embodiments of this application, along the first direction, a projection area of the first adhesive member is A, the overlapping area between the projection of the first adhesive member and the projection of the second adhesive member is S, and 0.4 ≤ S/A ≤ 1. This ensures that the projection area of the first adhesive member along the first direction and the projection area of the second adhesive member along the first direction have at least a partially overlapping region, which facilitates further suppressing the movement of the electrode assembly when the electrochemical apparatus is subjected to impact.

In one or more embodiments of this application, along the second direction, the length of the electrode assembly is L, and along the third direction, a width of the housing is W, where the first direction, the second direction, and the third direction are perpendicular to each other. Along the second direction, a length of the first adhesive member is L₁, and 0.4L ≤ L₁ ≤ 0.9L.

In one or more embodiments of this application, along the second direction, the length of the electrode assembly is L, and along the third direction, the width of the housing is W, where the first direction, the second direction, and the third direction are perpendicular to each other. Along the third direction, a width of the first adhesive member is W₁, and 0.4W ≤ W₁ ≤ 0.9W.

In one or more embodiments of this application, the first adhesive member includes a substrate layer, a first adhesion layer, a second adhesion layer, and a third adhesion layer. The first adhesion layer is connected to a surface of the substrate layer facing the housing, and the second adhesion layer and the third adhesion layer are connected to a surface of the substrate layer facing the electrode assembly. The first adhesion layer includes the first adhesive region, the second adhesion layer includes the second adhesive region, and the third adhesion layer includes the third adhesive region. This arrangement eliminates the need for composite multi-piece tapes to achieve bonding between the housing and the electrode assembly, facilitating reducing the overall thickness of the electrochemical apparatus and improving the energy density of the electrochemical apparatus.

In one or more embodiments of this application, the first adhesive member includes a first single-sided adhesive, a second single-sided adhesive, and a third single-sided adhesive. The first single-sided adhesive includes a first adhesive surface and a first non-adhesive surface opposite each other, the first adhesive surface including a fourth adhesive region, a fifth adhesive region, and the first adhesive region. The second single-sided adhesive includes a second adhesive surface and a second non-adhesive surface opposite each other, and the second adhesive surface includes a sixth adhesive region and the second adhesive region, where the sixth adhesive region is bonded to the fourth adhesive region. The third single-sided adhesive includes a third adhesive surface and a third non-adhesive surface opposite each other, and the third adhesive surface includes a seventh adhesive region and the third adhesive region, where the seventh adhesive region is bonded to the fifth adhesive region. Through the mutual bonding of the first single-sided adhesive, the second single-sided adhesive, and the third single-sided adhesive, the first adhesive member forms the first adhesive region, the second adhesive region, the third adhesive region, the first non-adhesive region, the second non-adhesive region, and the third non-adhesive region, offering the advantages of simple operation, high efficiency, and low cost. Additionally, the portion of the second single-sided adhesive provided with the sixth adhesive region and the portion of the third single-sided adhesive provided with the seventh adhesive region can further buffer the pulling force of the housing through deformation, thereby further reducing the risk of tearing of the outer electrode plates of the electrode assembly.

In one or more embodiments of this application, the electrode assembly further includes a second side surface, a third side surface, and a fourth side surface, where the second side surface is opposite the first side surface along the first direction, and the third side surface is opposite the fourth side surface along the second direction. The second adhesive region is bonded to both the first side surface and the third side surface. This arrangement enables the first adhesive member to transmit the pulling force of the housing to the third side surface of the electrode assembly. When the electrode assembly is a wound structure, the electrode plates at the arc-shaped third side surface more easily distribute the force transmitted by the adhesive member, thereby facilitating reducing the risk of damage to the outer electrode plates of the electrode assembly. When the electrode assembly is a laminated structure, the adhesive member bonds to the edges of a separator, a positive electrode plate, or a negative electrode plate at the third side surface, which does not easily cause damage to the electrode plates of the electrode assembly and facilitates suppressing relative sliding between the separator and the positive electrode plate or the negative electrode plate.

In one or more embodiments of this application, the electrode assembly further includes a second side surface, a third side surface, and a fourth side surface, where the second side surface is opposite the first side surface along the first direction, and the third side surface is opposite the fourth side surface along the second direction. The third adhesive region is bonded to both the first side surface and the fourth side surface. This arrangement enables the first adhesive member to transmit the pulling force of the housing to the fourth side surface of the electrode assembly. When the electrode assembly is a wound structure, the electrode plates at the arc-shaped fourth side surface more easily distribute the force transmitted by the adhesive member, facilitating reducing the risk of damage to the outer electrode plates of the electrode assembly. When the electrode assembly is a laminated structure, the adhesive member bonds to the edges of the separator, the positive electrode plate, or the negative electrode plate at the fourth side surface, which does not easily cause damage to the electrode plates of the electrode assembly and facilitates suppressing relative sliding between the separator and the positive electrode plate or the negative electrode plate.

A second aspect of this application provides an electric device, including the electrochemical apparatus according to any one of the above embodiments. The electrochemical apparatus has a reduced risk of movement and damage to the electrode assembly during drop tests, thereby improving the reliability of the electric device.

### BRIEF DESCRIPTION OF DRAWINGS

FIG. 1 is a schematic structural diagram of an electrochemical apparatus according to an embodiment of this application.
FIG. 2 is a schematic structural exploded view of the electrochemical apparatus shown in FIG. 1.
FIG. 3 is a cross-sectional view of an electrochemical apparatus according to an embodiment of this application.
FIG. 4 is a cross-sectional view of an electrochemical apparatus bonded to an external structure according to an embodiment of this application.
FIG. 5 is a cross-sectional view of a first adhesive member according to another embodiment of this application.
FIG. 6 is a top view of a first adhesive member and an electrode assembly according to an embodiment of this application.
FIG. 7 is a side view of a first adhesive member according to another embodiment of this application.
FIG. 8 is a side view of a first adhesive member according to still another embodiment of this application.
FIG. 9 is a cross-sectional view of an electrochemical apparatus according to another embodiment of this application.
FIG. 10 is a side view of a first adhesive member according to still another embodiment of this application.
FIG. 11 is a schematic diagram of an electric device according to an embodiment of this application.

**Reference signs of main components**

| | |
|---|---|
| Electrochemical apparatus | 100 |
| Housing | 10 |
| First sidewall | 11 |
| First surface | 111 |
| Second surface | 112 |
| Second sidewall | 12 |
| Third sidewall | 13 |
| Fourth sidewall | 14 |
| Fifth sidewall | 15 |
| Sixth sidewall | 16 |
| Electrode assembly | 20 |
| First side surface | 21 |
| Second side surface | 22 |
| Third side surface | 23 |
| Fourth side surface | 24 |
| First adhesive member | 30 |
| First side portion | 31 |
| First adhesive region | 311 |
| Second non-adhesive region | 312 |
| Third non-adhesive region | 313 |
| Substrate layer | 301 |
| First substrate portion | 3011 |
| Second substrate portion | 3012 |
| First adhesion layer | 302 |
| Second adhesion layer | 303 |
| Third adhesion layer | 304 |
| Second side portion | 32 |
| Second adhesive region | 321 |
| First non-adhesive region | 322 |
| Third adhesive region | 323 |
| First single-sided adhesive | 33 |
| First adhesive surface | 331 |
| Fourth adhesive region | 3311 |
| Fifth adhesive region | 3312 |
| First non-adhesive surface | 332 |
| Second single-sided adhesive | 34 |
| Second adhesive surface | 341 |
| Sixth adhesive region | 3411 |
| Second non-adhesive surface | 342 |
| Third single-sided adhesive | 35 |
| Third adhesive surface | 351 |
| Seventh adhesive region | 3511 |
| Third non-adhesive surface | 352 |
| Second adhesive member | 40 |
| First tab | 50 |
| Second tab | 60 |
| Head portion | 101 |
| Tail portion | 102 |
| Device body | 200 |
| Electric device | 1000 |
| First direction | X |
| Second direction | Y |
| Third direction | Z |

### DETAILED DESCRIPTION

The following describes the technical solutions in some embodiments of this application. Apparently, the described embodiments are only some rather than all embodiments of this application.

It should be noted that, in this application, the center of a region refers to the centroid of the planar shape of the region when the region is a continuous whole. It can be understood that the centroid of a planar shape can be determined by the suspension method, where the planar shape is hung with a thin thread, a straight line is drawn vertically from the starting point of the thread, the planar shape is hung again from a different endpoint, and another straight line is drawn in the same manner. The intersection of the two straight lines is the centroid of the planar shape. When the region consists of multiple discrete regions, the center of the region is the center of the smallest circumscribed circle containing the multiple discrete regions. It can be understood that the smallest circumscribed circle is the circle with the smallest radius that contains the multiple discrete regions.

It can be understood that when a component is referred to as being "connected to" another component, it may be directly connected to the another component or there may be a component therebetween. When a component is referred to as being "disposed at/on/in" another component, it may be directly disposed at/on/in the another component or there may be a component therebetween. The terms "top", "bottom", and other similar expressions as used herein are for illustration only.

The terms "first", "second", and the like are merely intended to distinguish between different objects, and shall not be understood as any indication or implication of relative importance or any implication of the number, sequence or primary-secondary relationship of the technical features indicated.

The term "perpendicular" is used to describe an ideal state between two parts. During actual production or use, an approximately perpendicular state may be present between the two components. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

It should be recognized that the dimensions and thicknesses of the components shown in the drawings are for better understanding and easier description, and this application is not limited to the dimensions and thicknesses shown in the drawings.

Unless otherwise defined, all technical and scientific terms used herein shall have the same meanings as commonly understood by persons skilled in the art to which this application belongs. The terms used herein in the specification of this application are intended to merely describe the specific embodiments rather than to limit this application.

The following describes some embodiments of this application with reference to the accompanying drawings. In absence of conflicts, the following embodiments and features in the embodiments may be combined.

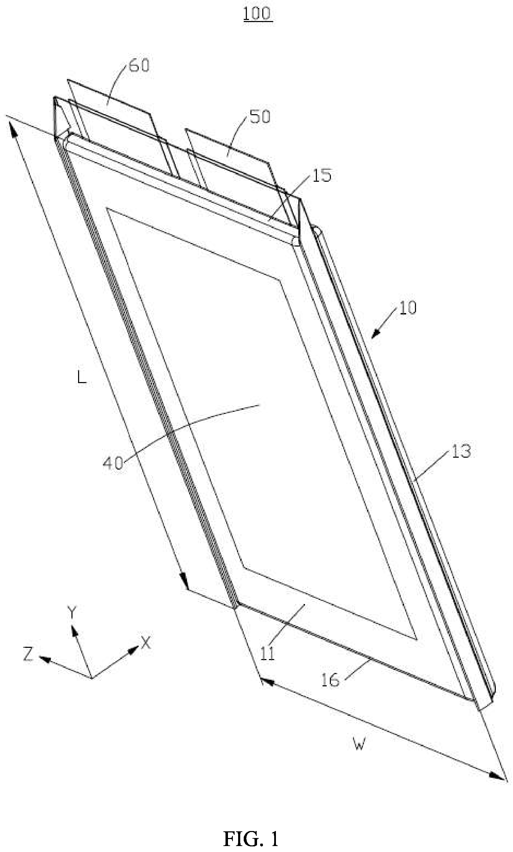

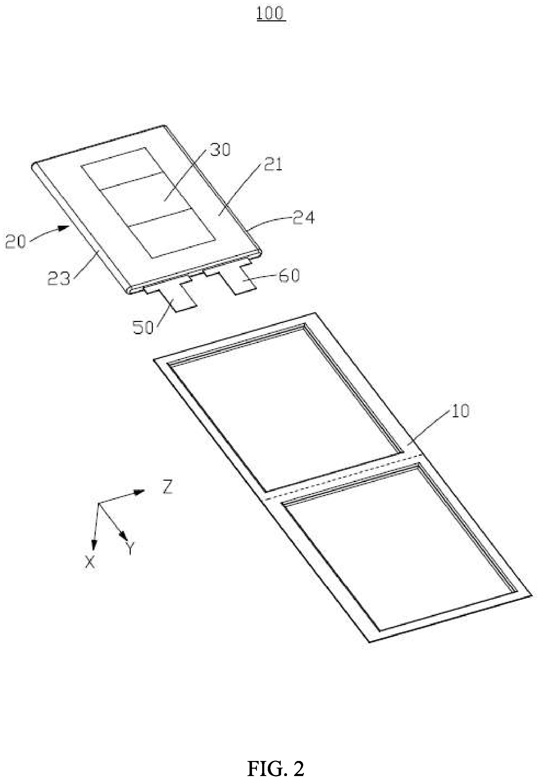

Referring to FIG. 1 and FIG. 2, an embodiment of this application provides an electrochemical apparatus 100, where the electrochemical apparatus 100 includes a housing 10 and an electrode assembly 20, and the electrode assembly 20 is disposed within the housing 10.

In some embodiments, referring to FIG. 1, FIG. 3, and FIG. 4, the housing 10 includes a first sidewall 11, where the first sidewall 11 includes a first surface 111 and a second surface 112 oppositely disposed along a first direction X, the first surface 111 being located inside the housing 10, and the second surface 112 being located outside the housing 10. Along the first direction X, the electrode assembly 20 is located on one side of the first sidewall 11.

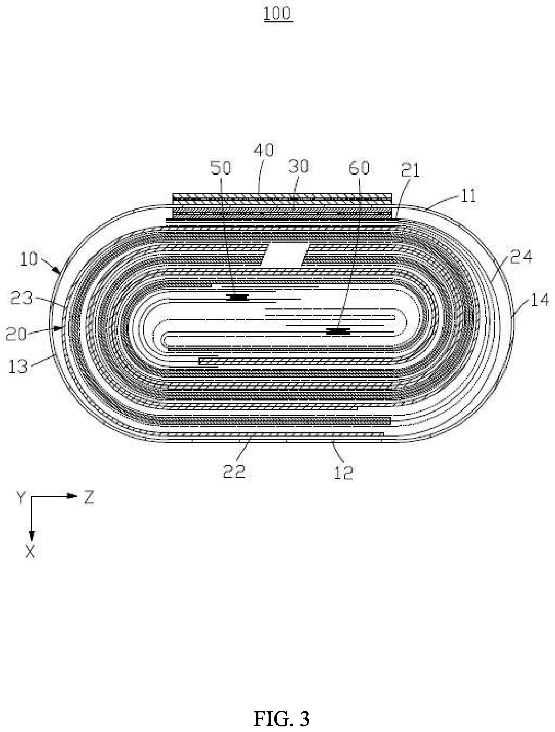

In some embodiments, referring to FIG. 1 and FIG. 3, the housing 10 includes a second sidewall 12, where along the first direction X, the first sidewall 11 and the second sidewall 12 are oppositely disposed. Along the first direction X, the electrode assembly 20 is located between the first sidewall 11 and the second sidewall 12.

In some embodiments, referring to FIG. 1 and FIG. 3, the housing 10 includes a third sidewall 13 and a fourth sidewall 14, where the third sidewall 13 and the fourth sidewall 14 are oppositely disposed along a second direction Y, and the second direction Y is perpendicular to the first direction X.

In some embodiments, referring to FIG. 1 and FIG. 3, the housing 10 includes a fifth sidewall 15 and a sixth sidewall 16, where the fifth sidewall 15 and the sixth sidewall 16 are oppositely disposed along a third direction Z, and the first direction X, the second direction Y, and the third direction Z are perpendicular to each other. The first sidewall 11, the second sidewall 12, the third sidewall 13, the fourth sidewall 14, the fifth sidewall 15, and the sixth sidewall 16 enclose a space for accommodating the electrode assembly 20.

In some embodiments, the housing 10 is a flexible housing 10, and the housing 10 includes, but is not limited to, an aluminum-plastic film.

In some embodiments, an electrolyte (not shown) is provided within the housing 10, where the electrolyte contains a lithium salt and a solvent, and the lithium salt may include at least one of LiPF, LiBF, LiClO, LiB(CH), LiCHSO, LiCFSOLiN(SOCF), LiC(SOCF), or LiBOB. The solvent may be a carbonate compound, a carboxylate compound, an ether compound, other organic solvents, or a combination thereof.

In some embodiments, referring to FIG. 2 and FIG. 3, the electrode assembly 20 includes a first side surface 21 adjacent to the first surface 111.

In some embodiments, referring to FIG. 3, the electrode assembly 20 includes a second side surface 22, where along the first direction X, the first side surface 21 and the second side surface 22 are oppositely disposed, and the second side surface 22 is adjacent to the second sidewall 12.

In some embodiments, the electrode assembly 20 includes a third side surface 23 and a fourth side surface 24, and the third side surface 23 and the fourth side surface 24 are oppositely disposed along the second direction Y.

In some embodiments, the electrode assembly 20 is a wound structure, and the third side surface 23 and the fourth side surface 24 are arc-shaped side surfaces.

In some embodiments, the electrode assembly 20 includes a positive electrode plate, a negative electrode plate, and a separator, where the positive electrode plate, the negative electrode plate, and the separator may be stacked to form a laminated structure, or the positive electrode plate, the negative electrode plate, and the separator may be stacked and then wound to form a wound structure.

In some embodiments, the positive electrode plate includes a positive electrode current collector and a positive electrode active material layer disposed on the positive electrode current collector. The negative electrode plate includes a negative electrode current collector and a negative electrode active material layer disposed on the negative electrode current collector.

In some embodiments, a portion of the positive electrode current collector is provided with the positive electrode active material layer, and a portion of the positive electrode current collector is not provided with the positive electrode active material layer. A portion of the negative electrode current collector is provided with the negative electrode active material layer, and a portion of the negative electrode current collector is not provided with the negative electrode active material layer.

The positive electrode current collector and the negative electrode current collector may be metal layers. In an illustrative example, the positive electrode current collector may be a metal layer including at least one of aluminum, nickel, tantalum, or titanium, such as aluminum foil. The positive electrode active material layer includes a positive electrode active material, and the positive electrode active material may include at least one of lithium cobalt oxide, lithium nickel cobalt manganese oxide, lithium nickel cobalt aluminate, lithium iron phosphate, lithium manganese iron phosphate, or lithium manganese oxide. The negative electrode current collector may be a metal layer including at least one of copper, nickel, tantalum, or titanium, such as copper foil. The negative electrode active material layer includes a negative electrode active material, and the negative electrode active material may include at least one of graphite, hard carbon, soft carbon, silicon, a silicon-oxygen material, or a silicon-carbon material.

In some embodiments, the outermost layer of the electrode assembly 20 has a positive electrode current collector layer without the positive electrode active material layer, and the positive electrode current collector is aluminum foil.

In some embodiments, the separator is an insulating film material such as a polyethylene film, a polypropylene film, a polyester film, or a polyimide film.

In some embodiments, referring to FIG. 3 to FIG. 5, the electrochemical apparatus 100 includes a first adhesive member 30 and a second adhesive member 40. The first adhesive member 30 is located between the housing 10 and the electrode assembly 20, and the first adhesive member 30 includes a first side portion 31 and a second side portion 32 opposite each other. The first side portion 31 includes a first adhesive region 311 bonded to the first surface 111, and the second side portion 32 includes a second adhesive region 321, a first non-adhesive region 322, and a third adhesive region 323 sequentially arranged along the second direction Y, where the second adhesive region 321 and the third adhesive region 323 are bonded to the first side surface 21, and the second direction Y is perpendicular to the first direction X. Along the first direction X, a projection of the first non-adhesive region 322 overlaps with a projection of the first adhesive region 311. The second adhesive member 40 is bonded to the second surface 112, and the second adhesive member 40 is configured to bond to an external structure.

In this application, the first adhesive region 311 of the first adhesive member 30 is bonded to the first surface 111, and the second adhesive member 40 is bonded to the second surface 112, so that both the first adhesive member 30 and the second adhesive member 40 are located on one side of the electrode assembly 20 along the first direction X, which facilitates suppressing the overall movement of the electrochemical apparatus 100 relative to the external structure. The projection of the first non-adhesive region 322 along the first direction X overlaps with the projection of the first adhesive region 311 along the first direction X, which facilitates reducing the impact force transmitted by the adhesive member to the electrode assembly 20 when the electrochemical apparatus 100 is subjected to impact, thereby facilitating reducing the risk of damage to the outer electrode plates of the electrode assembly 20.

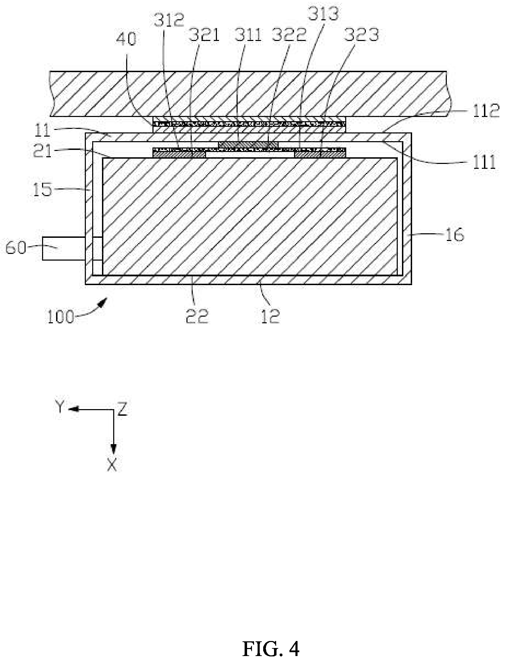

In some embodiments, referring to FIG. 4, the second side surface 22 is in direct contact with the second sidewall 12, which facilitates improving the space utilization within the housing 10 and increasing the energy density of the electrochemical apparatus 100.

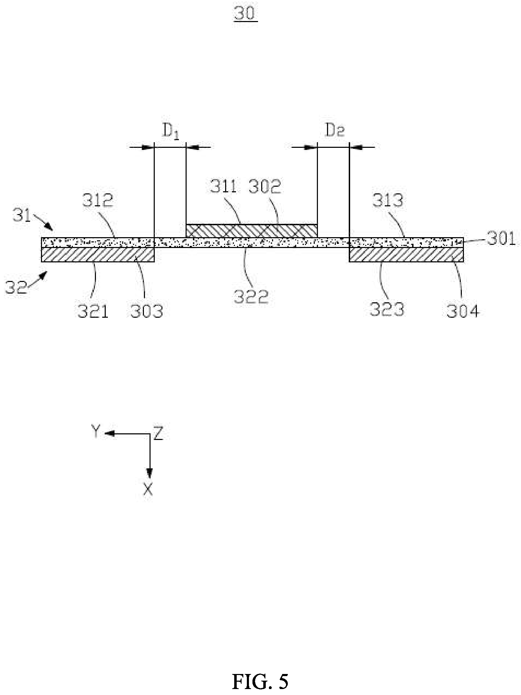

In some embodiments, referring to FIG. 4 and FIG. 5, the first side portion 31 further includes a second non-adhesive region 312 and a third non-adhesive region 313, and along the second direction Y, the first adhesive region 311 is located between the second non-adhesive region 312 and the third non-adhesive region 313. Along the first direction X, a projection of the second non-adhesive region 312 overlaps with the second adhesive region 321, and a projection of the third non-adhesive region 313 overlaps with the third adhesive region 323. This arrangement reduces the pulling force of the first adhesive member 30 on the first side surface 21 when the electrochemical apparatus 100 is subjected to impact, thereby reducing the risk of damage to the outer electrode plates of the electrode assembly 20.

In some embodiments, referring to FIG. 4 and FIG. 5, along the first direction X, the projection of the first non-adhesive region 322 covers the projection of the first adhesive region 311, the projection of the second non-adhesive region 312 covers the second adhesive region 321, and the projection of the third non-adhesive region 313 covers the third adhesive region 323. Along the second direction Y, a distance between the first adhesive region 311 and the second adhesive region 321 is greater than 0, and a distance between the first adhesive region 311 and the third adhesive region 323 is greater than 0. This arrangement allows a portion of the first adhesive member 30 to be neither bonded to the first surface 111 nor to the first side surface 21, so that when the electrochemical apparatus 100 is subjected to impact, the force transmitted from the housing 10 to the electrode assembly 20 is dissipated and absorbed through deformation of the portion of the first adhesive member 30. This not only facilitates suppressing relative movement between the electrode assembly 20 and the housing 10, but also further reduces the force transmitted by the first adhesive member 30 to the first side surface 21, thereby facilitating reducing the risk of damage to the outer electrode plates of the electrode assembly 20.

In some embodiments, referring to FIG. 1 to FIG. 4, the electrochemical apparatus 100 further includes a first tab 50 and a second tab 60 having opposite polarities. The first tab 50 and the second tab 60 are connected to the electrode assembly 20 and extend out of the housing 10 along the second direction Y. The side of the electrochemical apparatus 100 where the first tab 50 and the second tab 60 extend is defined as a head portion 101, and the side of the electrochemical apparatus 100 opposite to the head portion 101 is defined as a tail portion 102. This arrangement ensures that the second non-adhesive region 312, the first adhesive region 311, and the third non-adhesive region 313 are sequentially arranged along the direction from the head portion 101 to the tail portion 102 or from the tail portion 102 to the head portion 101 of the electrochemical apparatus 100, and the second adhesive region 321, the first non-adhesive region 322, and the third adhesive region 323 are sequentially arranged along the direction from the head portion 101 to the tail portion 102 or from the tail portion 102 to the head portion 101 of the electrochemical apparatus 100. This facilitates suppressing the movement of the electrode assembly 20 relative to the housing 10 along the second direction Y when the electrochemical apparatus 100 is subjected to impact and reducing the impact on the corners of the housing 10 and the impact on the electrode assembly 20 close to the head portion 101 and tail portion 102, thereby facilitating reducing the risk of damage to the housing 10 and short circuits in the electrochemical apparatus 100.

It should be noted that, in some embodiments where the electrode assembly 20 is a wound structure, along the second direction Y, both the side of the electrode assembly 20 close to the head portion 101 and the side close to the tail portion 102 adopt an overhang design (along the second direction Y, the negative electrode plate extends beyond a positive electrode plate). When the electrode assembly 20 moves along the second direction Y, the electrode assembly 20 impacts the free electrolyte near the head portion 101 and tail portion 102 of the housing 10. By sequentially arranging the second adhesive region 321, the first non-adhesive region 322, and the third adhesive region 323 along the second direction Y, and sequentially arranging the second non-adhesive region 312, the first adhesive region 311, and the third non-adhesive region 313 along the second direction Y, it facilitates suppressing the movement of the electrode assembly 20 relative to the housing 10 along the second direction Y and the impact on the free electrolyte near the head portion 101 and tail portion 102 of the housing 10 and suppressing the impact on the negative electrode plate and the separator near the head portion 101 and tail portion 102 of the electrode assembly 20, thereby reducing the risk of short circuits.

In some embodiments, the first tab 50 is connected to the positive electrode plate, and the polarity of the first tab 50 is positive. The second tab 60 is connected to the negative electrode plate, and the polarity of the second tab 60 is negative.

In some other embodiments, the first tab 50 is connected to the negative electrode plate, and the polarity of the first tab 50 is negative. The second tab 60 is connected to the positive electrode plate, and the polarity of the second tab 60 is positive.

In some embodiments, referring to FIG. 1, along the second direction Y, a length of the electrode assembly 20 is L, and along the third direction Z, a width of the electrode assembly 20 is W, where the first direction X, the second direction Y, and the third direction Z are perpendicular to each other, and W < L.

In some embodiments where the second adhesive region 321, the first non-adhesive region 322, and the third adhesive region 323 are sequentially arranged along the second direction Y, the length L of the housing 10 along the second direction Y is greater than the width W of the housing 10 along the third direction Z, which facilitates increasing an area of the electrode assembly 20 available for bonding to the first adhesive member 30 and also providing an area corresponding to the first non-adhesive region 322. This facilitates dispersing the pulling force of the first adhesive member 30 on the electrode assembly 20, thereby facilitating reducing the risk of damage to the outer electrode plates of the electrode assembly 20.

In some embodiments, W < L, 30 mm ≤ L ≤ 150 mm, and 25 mm ≤ W ≤ 100 mm.

In an illustrative example, L may be any one of 30 mm, 31 mm, 32 mm, 33 mm, 34 mm, 35 mm, 40 mm, 45 mm, 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, 146 mm, 147 mm, 148 mm, 149 mm, or 150 mm, or any value therebetween.

In an illustrative example, W may be any one of 25 mm, 26 mm, 27 mm, 28 mm, 29 mm, 30 mm, 31 mm, 32 mm, 33 mm, 34 mm, 35 mm, 40 mm, 45 mm, 50 mm, 55 mm, 60 mm, 65 mm, 70 mm, 75 mm, 80 mm, 85 mm, 90 mm, 95 mm, 96 mm, 97 mm, 98 mm, 99 mm, or 100 mm, or any value therebetween.

In some embodiments, referring to FIG. 4 and FIG. 5, along the second direction Y, the distance between the first adhesive region 311 and the second adhesive region 321 is D₁, and 0.5 mm ≤ D₁ ≤ 14 mm. When 0.5 mm ≤ D₁ ≤ 14 mm, the offset distance between the first adhesive region 311 and the second adhesive region 321 is not too long, facilitating suppressing the movement of the electrode assembly 20 relative to the housing 10; and the offset distance between the first adhesive region 311 and the second adhesive region 321 is also not too short, facilitating reducing the pulling force transmitted by the first adhesive member 30 to the electrode assembly 20, thereby facilitating reducing the risk of damage to the outer electrode plates of the electrode assembly 20.

In an illustrative example, D₁ may be any one of 0.5 mm, 0.6 mm, 0.7 mm, 0.8 mm, 0.9 mm, 1 mm, 2 mm, 3 mm, 4 mm, 5 mm, 6 mm, 7 mm, 8 mm, 9 mm, 9.5 mm, 9.6 mm, 9.7 mm, 9.8 mm, 9.9 mm, 10 mm, 11 mm, 12 mm, 13 mm, 13.1 mm, 13.2 mm, 13.3 mm, 13.4 mm, 13.5 mm, 13.6 mm, 13.7 mm, 13.8 mm, 13.9 mm, or 14 mm, or any value therebetween.

In some embodiments, referring to FIG. 4 and FIG. 5, along the second direction Y, the distance between the first adhesive region 311 and the third adhesive region 323 is D₂, and 0.5 mm ≤ D₂ ≤ 14 mm. When 0.5 mm ≤ D₂ ≤ 14 mm, the offset distance between the first adhesive region 311 and the third adhesive region 323 is not too long, facilitating suppressing the movement of the electrode assembly 20 relative to the housing 10; and the offset distance between the first adhesive region 311 and the third adhesive region 323 is also not too short, facilitating reducing the pulling force transmitted by the first adhesive member 30 to the electrode assembly 20, thereby facilitating reducing the risk of damage to the outer electrode plates of the electrode assembly 20.

In an illustrative example, D₂ may be any one of 0.5 mm, 0.6 mm, 0.7 mm, 0.8 mm, 0.9 mm, 1 mm, 2 mm, 3 mm, 4 mm, 5 mm, 6 mm, 7 mm, 8 mm, 9 mm, 9.5 mm, 9.6 mm, 9.7 mm, 9.8 mm, 9.9 mm, 10 mm, 11 mm, 12 mm, 13 mm, 13.1 mm, 13.2 mm, 13.3 mm, 13.4 mm, 13.5 mm, 13.6 mm, 13.7 mm, 13.8 mm, 13.9 mm, or 14 mm, or any value therebetween.

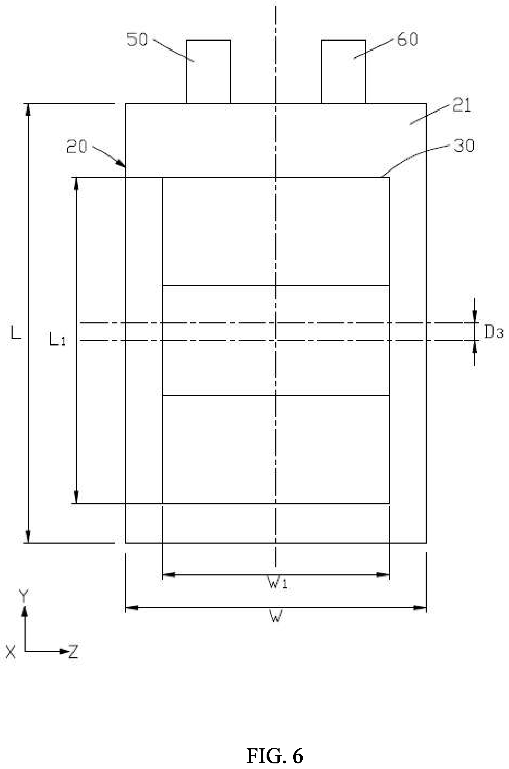

In some embodiments, referring to FIG. 6, along the second direction Y, a distance between the center of the first adhesive member 30 and the center of the electrode assembly 20 is D₃, and D₃ ≤ 0.1L, which facilitates suppressing the movement of the electrode assembly 20 and reducing the risk of damage to the outer electrode plates of the electrode assembly 20.

In an illustrative example, D₃ may be any one of 0, 0.01L, 0.02L, 0.03L, 0.04L, 0.05L, 0.06L, 0.07L, 0.08L, 0.09L, or 0.1L, or any value therebetween.

In some embodiments, referring to FIG. 6, along the second direction Y, the length of the electrode assembly 20 is L, and along the third direction Z, the width of the electrode assembly 20 is W, and along the second direction Y, a length of the first adhesive member 30 is L₁, and 0.4L ≤ L₁ ≤ 0.9L. This arrangement facilitates suppressing the movement of the electrode assembly 20 and reducing the risk of damage to the outer electrode plates of the electrode assembly 20.

In an illustrative example, L₁ may be any one of 0.4L, 0.45L, 0.5L, 0.55L, 0.6L, 0.65L, 0.7L, 0.75L, 0.8L, 0.85L, or 0.9L, or any value therebetween.

In some embodiments, referring to FIG. 6, along the second direction Y, the length of the electrode assembly 20 is L, and along the third direction Z, the width of the electrode assembly 20 is W, and along the third direction Z, a width of the first adhesive member 30 is W₁, and 0.4W ≤ W₁ ≤ 0.9W. This arrangement facilitates suppressing the movement of the electrode assembly 20 and reducing the risk of damage to the outer electrode plates of the electrode assembly 20.

In an illustrative example, W₁ may be any one of 0.4W, 0.45W, 0.5W, 0.55W, 0.6W, 0.65W, 0.7W, 0.75W, 0.8W, 0.85W, or 0.9W, or any value therebetween.

In some embodiments, referring to FIG. 4, along the first direction X, a projection of the first adhesive member 30 overlaps with a projection of the second adhesive member 40, which facilitates suppressing the movement of the electrode assembly 20 when the electrochemical apparatus 100 is subjected to impact.

In some embodiments, referring to FIG. 4, along the first direction X, the projection of the second adhesive member 40 covers the projection of the first adhesive member 30, which facilitates increasing an area of an overlapping region between the projection of the first adhesive member 30 and the projection of the second adhesive member 40, further facilitating suppressing the movement of the electrode assembly 20 when the electrochemical apparatus 100 is subjected to impact.

In some embodiments, along the first direction X, a projection area of the first adhesive member 30 is A, the overlapping area between the projection of the first adhesive member 30 and the projection of the second adhesive member 40 is S, and 0.4 ≤ S/A ≤ 1. This arrangement ensures that the projection area of the first adhesive member 30 along the first direction X and the projection area of the second adhesive member 40 along the first direction X have at least a partially overlapping region, which facilitates further suppressing the movement of the electrode assembly 20 when the electrochemical apparatus 100 is subjected to impact.

In an illustrative example, S/A may be any one of 0.4, 0.41, 0.42, 0.43, 0.44, 0.45, 0.5, 0.55, 0.6, 0.65, 0.7, 0.75, 0.8, 0.85, 0.9, 0.95, 0.96, 0.97, 0.98, 0.99, or 1, or any value therebetween.

In some embodiments, referring to FIG. 5, the first adhesive member 30 includes a substrate layer 301, a first adhesion layer 302, a second adhesion layer 303, and a third adhesion layer 304, and the first adhesion layer 302 is connected to a surface of the substrate layer 301 facing the housing 10. The second adhesion layer 303 and the third adhesion layer 304 are connected to a surface of the substrate layer 301 facing the electrode assembly 20. The first adhesion layer 302 includes the first adhesive region 311, the second adhesion layer 303 includes the second adhesive region 321, and the third adhesion layer 304 includes the third adhesive region 323. This arrangement eliminates the need for composite multi-piece tapes to achieve bonding between the housing 10 and the electrode assembly 20, facilitating reducing the overall thickness of the electrochemical apparatus 100 and improving the energy density of the electrochemical apparatus 100.

It can be understood that the first adhesion layer 302, the second adhesion layer 303, and the third adhesion layer 304 may be formed by applying an adhesive substance to predetermined regions of the substrate layer 301, or the first adhesion layer 302, the second adhesion layer 303, and the third adhesion layer 304 may be formed by applying the adhesive substance to two surfaces of the substrate layer 301 and then removing the adhesive substance from specific areas.

In some embodiments, the material of the substrate layer 301 may include any one of PET (polyethylene terephthalate), PVC (polyvinyl chloride), or PI (polyimide).

In some embodiments, referring to FIG. 5, a portion of the surface of the substrate layer 301 facing the electrode assembly 20 is exposed to form the first non-adhesive region 322; a portion of the surface of the substrate layer 301 facing the housing 10 is exposed to form the second non-adhesive region 312 and the third non-adhesive region 313. This arrangement eliminates the need for composite multi-piece tapes to achieve a portion of the first adhesive member 30 that is not bonded to the first surface 111 of the housing 10 and a portion of the first adhesive member 30 that is not bonded to the first side surface 21 of the electrode assembly 20, thereby facilitating reducing the overall thickness of the electrochemical apparatus 100 and improving the energy density of the electrochemical apparatus 100.

It can be understood that a cover may be covered in advance on predetermined surfaces of the substrate layer 301, and the adhesive substance may be applied to the substrate layer 301. After removing the cover, the previously covered surfaces form the exposed first non-adhesive region 322, second non-adhesive region 312, and third non-adhesive region 313 without the adhesive substance. Alternatively, the adhesive substance may be applied to two surfaces of the substrate layer 301, and then the adhesive substance may be removed from specific surfaces to expose the surfaces of the substrate layer 301 where the adhesive substance is removed so as to form the first non-adhesive region 322, the second non-adhesive region 312, and the third non-adhesive region 313.

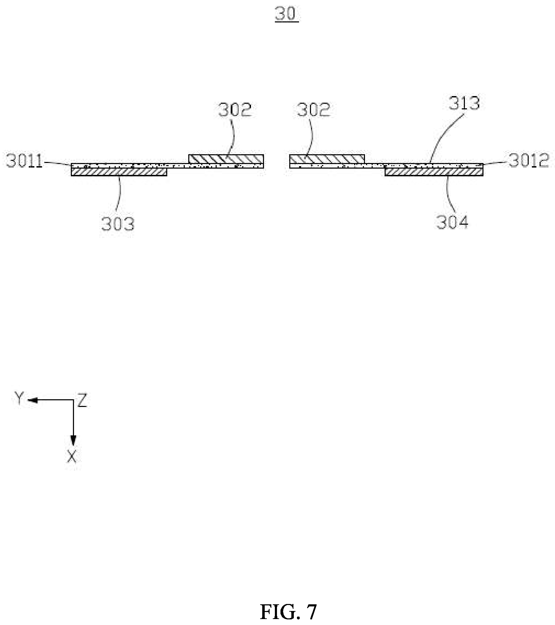

In some embodiments, referring to FIG. 7, the substrate layer 301 includes a first substrate portion 3011 and a second substrate portion 3012, where the first substrate portion 3011 and the second substrate portion 3012 are independent parts, the first substrate portion 3011 is provided with the second adhesion layer 303 and a portion of the first adhesion layer 302, and the second substrate portion 3012 is provided with the third adhesion layer 304 and a portion of the first adhesion layer 302. The first substrate portion 3011 and the second substrate portion 3012 are arranged spaced apart along the second direction Y. This facilitates reducing the risk of damage to the outer electrode plates of the electrode assembly 20.

In some other embodiments, the first substrate portion 3011 and the second substrate portion 3012 are arranged along the third direction Z. This facilitates reducing the risk of damage to the outer electrode plates of the electrode assembly 20.

It can be understood that the surface of the first substrate portion 3011 facing the first region and the surface of the second substrate portion 3012 facing the first region together form the first non-adhesive region 322.

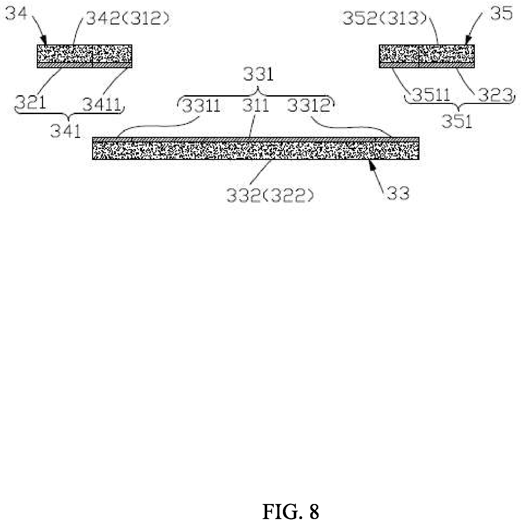

In some embodiments, referring to FIG. 8, the first adhesive member 30 includes a first single-sided adhesive 33, a second single-sided adhesive 34, and a third single-sided adhesive 35, where the first single-sided adhesive 33 includes a first adhesive surface 331 and a first non-adhesive surface 332 opposite each other, and the first adhesive surface 331 includes a fourth adhesive region 3311, a fifth adhesive region 3312, and the first adhesive region 311. The second single-sided adhesive 34 includes a second adhesive surface 341 and a second non-adhesive surface 342 opposite each other, and the second adhesive surface 341 includes a sixth adhesive region 3411 and the second adhesive region 321, where the sixth adhesive region 3411 is bonded to the fourth adhesive region 3311. The third single-sided adhesive 35 includes a third adhesive surface 351 and a third non-adhesive surface 352 opposite each other, and the third adhesive surface 351 includes a seventh adhesive region 3511 and the third adhesive region 323, where the seventh adhesive region 3511 is bonded to the fifth adhesive region 3312.

Through the mutual bonding of the first single-sided adhesive 33, the second single-sided adhesive 34, and the third single-sided adhesive 35, the first adhesive member 30 forms the first adhesive region 311, the second adhesive region 321, the third adhesive region 323, the first non-adhesive region 322, the second non-adhesive region 312, and the third non-adhesive region 313, offering the advantages of simple operation, high efficiency, and low cost. Additionally, the portion of the second single-sided adhesive 34 provided with the sixth adhesive region 3411 and the portion of the third single-sided adhesive 35 provided with the seventh adhesive region 3511 can further buffer the pulling force of the housing 10 through deformation, thereby further reducing the risk of tearing of the outer electrode plates of the electrode assembly 20.

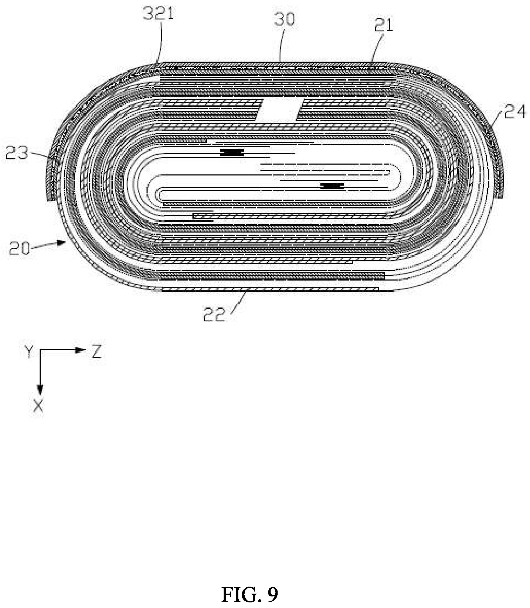

In some embodiments, referring to FIG. 9, the second adhesive region 321 is bonded to both the first side surface 21 and the third side surface 23. This arrangement enables the first adhesive member 30 to transmit the pulling force of the housing 10 to the third side surface 23 of the electrode assembly 20. When the electrode assembly 20 is a wound structure, the electrode plates at the arc-shaped third side surface 23 more easily distribute the force transmitted by the adhesive member, thereby facilitating reducing the risk of damage to the outer electrode plates of the electrode assembly 20. When the electrode assembly 20 is a laminated structure, the adhesive member bonds to the edges of the separator, the positive electrode plate, or the negative electrode plate at the third side surface 23, which does not easily cause damage to the electrode plates of the electrode assembly 20 and facilitates suppressing relative sliding between the separator and the positive electrode plate or the negative electrode plate.

In some embodiments, the third adhesive region 323 is bonded to both the first side surface 21 and the fourth side surface 24. This arrangement enables the first adhesive member 30 to transmit the pulling force of the housing 10 to the fourth side surface 24 of the electrode assembly 20. When the electrode assembly 20 is a wound structure, the electrode plates at the arc-shaped fourth side surface 24 more easily distribute the force transmitted by the adhesive member, facilitating reducing the risk of damage to the outer electrode plates of the electrode assembly 20. When the electrode assembly 20 is a laminated structure, the adhesive member bonds to the edges of the separator, the positive electrode plate, or the negative electrode plate at the fourth side surface 24, which does not easily cause damage to the electrode plates of the electrode assembly 20 and facilitates suppressing relative sliding between the separator and the positive electrode plate or the negative electrode plate.

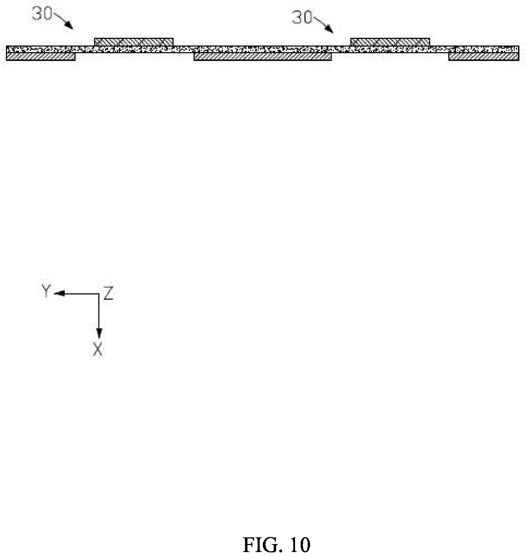

In some embodiments, referring to FIG. 10, multiple first adhesive members 30 are provided, and the multiple first adhesive members 30 are sequentially arranged along the second direction Y, where the multiple first adhesive members 30 are integrally formed and connected. The integral formation of the multiple first adhesive members 30 facilitates increasing the portion of the adhesive member that is neither bonded to the first surface 111 nor to the first side surface 21, so that when the electrochemical apparatus 100 is subjected to impact, the force transmitted from the housing 10 to the electrode assembly 20 is dissipated and absorbed through deformation of the portion of the multiple first adhesive members 30, thereby facilitating reducing the risk of damage to the outer electrode plates of the electrode assembly 20.

Taking the example where the first adhesive member 30 includes the substrate layer 301, the first adhesion layer 302, the second adhesion layer 303, and the third adhesion layer 304, the substrate layers 301 of two first adhesive members 30 are integrally formed, and the first adhesion layer 302 of one first adhesive member 30 and the third adhesion layer 304 of another first adhesive member 30 are integrally formed.

In some other embodiments, multiple first adhesive members 30 are provided, each first adhesive member 30 is an independent part, and the multiple first adhesive members 30 are arranged spaced apart along the second direction Y.

It should be understood that when multiple first adhesive members 30 are provided, the sum of the distances D₁ between the multiple first adhesive regions 311 and the second adhesive region 321 is in the range of 0.5 mm to 10 mm, the sum of the distances D₂ between the multiple first adhesive regions 311 and the third adhesive region 323 is in the range of 0.5 mm to 10 mm, and the ratio of the overlapping area between the projections of the multiple first adhesive members 30 along the first direction X and the projection of the second adhesive member 40 along the first direction X to the projection area of the multiple first adhesive members 30 along the first direction X is in the range of 0.4 to 1.

To verify the influence of each adhesive region and non-adhesive region of the first adhesive member 30 on the electrochemical apparatus 100, the following tests were conducted:

A lithium-ion pouch battery with a rectangular maximum projection surface was selected, where the wound electrode assembly 20 inside the lithium-ion pouch battery had a length L of 87 mm, a width W of 64 mm, and a thickness of 4.8 mm.

In the comparative example, a double-sided adhesive tape with a length of 60.9 mm and a width of 38 mm was used as the first adhesive member 30 to bond the first surface 111 to the first side surface 21. A double-sided adhesive tape with a length of 60.9 mm and a width of 38 mm was used as the second adhesive member 40 bonded to the second surface 112.

In Examples 1 to 15, the first tab 50 and the second tab 60 were connected to the electrode assembly 20 and extended out of the housing 10 along the second direction Y. The second adhesive region 321, the first non-adhesive region 322, and the third adhesive region 323 were sequentially arranged along the second direction Y, and the second non-adhesive region 312, the first adhesive region 311, and the third non-adhesive region 313 were sequentially arranged along the second direction Y. One first adhesive member 30 and one second adhesive member 40 were provided, and the first adhesive member 30 included the first adhesion layer 302, the second adhesion layer 303, the third adhesion layer 304, the first adhesive region 311, the second adhesive region 321, and the third adhesive region 323, where the first adhesive region 311 coincided with the center of the first side surface 21. The first adhesive member 30 had a length of 60.9 mm and a width of 38 mm. A double-sided adhesive tape with a length of 60.9 mm and a width of 38 mm was used as the second adhesive member 40. The differences between Examples 1 to 15 are shown in the values in Table 1 below.

The parameters of the first adhesive member 30 in the above examples are shown in Table 1 below.

Twenty batteries were selected from each group for drop test pass rate comparison, with the batteries tested in a drop sequence of six surfaces and four corners at a drop height of 1.5 m. After the drop, the housing 10 was observed for broken or electrolyte leakage, and the number of batteries with housings 10 broken or undergone electrolyte leakage was recorded. If the housing 10 was neither broken nor undergone electrolyte leakage, the lithium-ion pouch battery was disassembled to observe whether the outer electrode plates of the electrode assembly 20 were torn or damaged, and the number of batteries with torn or damaged outer electrode plates was recorded. If the housing 10 was neither broken nor undergone electrolyte leakage and the outer electrode plates were neither torn nor damaged, the test was deemed passed; otherwise, it was deemed failed. Pass rate = number of passes / 20 × 100%.

**Table 1**

| Group | D₁ | D₂ | S/A | Number of tests | Number of batteries with housing 10 broken or undergone electrolyte leakage | Number of batteries with outer electrode plates torn or damaged | Pass rate (%) |
|---|---|---|---|---|---|---|---|
| Comparative Example | - | - | 1 | 20 | 0 | 18 | 10 |
| Example 1 | 0.1 | 0.1 | 1 | 20 | 0 | 4 | 80 |
| Example 2 | 0.5 | 0.5 | 1 | 20 | 0 | 1 | 95 |
| Example 3 | 1 | 1 | 1 | 20 | 0 | 0 | 100 |
| Example 4 | 2 | 2 | 1 | 20 | 0 | 0 | 100 |
| Example 5 | 4 | 4 | 1 | 20 | 0 | 0 | 100 |
| Example 6 | 6 | 6 | 1 | 20 | 1 | 0 | 95 |
| Example 7 | 8 | 8 | 1 | 20 | 1 | 0 | 95 |
| Example 8 | 10 | 10 | 1 | 20 | 1 | 0 | 95 |
| Example 9 | 12 | 12 | 1 | 20 | 2 | 0 | 90 |
| Example 10 | 14 | 14 | 1 | 20 | 2 | 0 | 90 |
| Example 11 | 16 | 16 | 1 | 20 | 4 | 0 | 80 |
| Example 12 | 4 | 4 | 0.2 | 20 | 5 | 0 | 75 |
| Example 13 | 4 | 4 | 0.4 | 20 | 2 | 0 | 90 |
| Example 14 | 4 | 4 | 0.6 | 20 | 1 | 0 | 95 |
| Example 15 | 4 | 4 | 0.8 | 20 | 0 | 0 | 100 |
| Example 16 | 4 | 4 | 1 | 20 | 0 | 0 | 100 |

Referring to Table 1, compared to the comparative example, in Examples 1 to 16, the first adhesive region 311 of the first adhesive member 30 is bonded to the first surface 111, the second adhesive member 40 is bonded to the second surface 112, both the first adhesive member 30 and the second adhesive member 40 are located on one side of the electrode assembly 20 along the first direction X, and the projection of the first non-adhesive region 322 along the first direction X overlaps with the projection of the first adhesive region 311 along the first direction X. Examples 1-15 facilitate suppressing the overall movement of the electrochemical apparatus 100 relative to the external structure and reducing the impact force transmitted from the adhesive member to the electrode assembly 20 when the electrochemical apparatus 100 is subjected to impact, thereby facilitating reducing the risk of damage to the outer electrode plates of the electrode assembly 20.

Referring to Table 1, compared to Example 1 and Example 11, Examples 2 to 10 satisfy 0.5 mm ≤ D₁ ≤ 14 mm and 0.5 mm ≤ D₂ ≤ 14 mm. This ensures that the offset distance between the first adhesive region 311 and the second adhesive region 321 is not too long, and the offset distance between the first adhesive region 311 and the third adhesive region 323 is not too long, facilitating suppressing the movement of the electrode assembly 20 relative to the housing 10. It also ensures that the offset distance between the first adhesive region 311 and the second adhesive region 321 is not too short, and the offset distance between the first adhesive region 311 and the third adhesive region 323 is not too short, facilitating reducing the pulling force transmitted by the first adhesive member 30 to the electrode assembly 20, thereby facilitating reducing the risk of damage to the outer electrode plates of the electrode assembly 20.

Referring to Table 1, compared to Example 12, Examples 13 to 16 satisfy 0.4 ≤ S/A ≤ 1, ensuring that the projection area of the first adhesive member 30 along the first direction X and the projection area of the second adhesive member 40 along the first direction X have at least a partially overlapping region, which facilitates further suppressing the movement of the electrode assembly 20 when the electrochemical apparatus 100 is subjected to impact.

Twenty batteries were selected from each group for drop test pass rate comparison, with the batteries tested in a drop sequence of six surfaces and four corners at a drop height of 1.5 m. The voltage of the batteries was tested before the drop test.

Voltage drop test: After the drop, a 96-hour voltage monitoring was conducted, with measurements taken every 24 hours for a total of four measurements. If any single voltage drop exceeded 10 mV, it was deemed an internal short-circuit failure, and the test was deemed failed. If any single voltage drop did not exceed 10 mV, the test was deemed passed. Pass rate = number of passes / 20 × 100%.

Examples 17 to 20 differ from Examples 1 to 16 in that the second adhesive region 321, the first non-adhesive region 322, and the third adhesive region 323 were sequentially arranged along the third direction Z, and the second non-adhesive region 312, the first adhesive region 311, and the third non-adhesive region 313 were sequentially arranged along the third direction Z.

**Table 2**

| Group | D₁ | D₂ | S/A | Number of tests | Number of batteries failing voltage drop test | Pass rate (%) |
|---|---|---|---|---|---|---|
| Example 13 | 4 | 4 | 0.4 | 20 | 0 | 100 |
| Example 14 | 4 | 4 | 0.6 | 20 | 0 | 100 |
| Example 15 | 4 | 4 | 0.8 | 20 | 0 | 100 |
| Example 16 | 4 | 4 | 1 | 20 | 1 | 95 |
| Example 17 | 4 | 4 | 0.4 | 20 | 3 | 85 |
| Example 18 | 4 | 4 | 0.6 | 20 | 2 | 90 |
| Example 19 | 4 | 4 | 0.8 | 20 | 2 | 90 |
| Example 20 | 4 | 4 | 1 | 20 | 2 | 90 |

Referring to Table 2, compared to Examples 17-20, in Examples 13-16, the second adhesive region 321, the first non-adhesive region 322, and the third adhesive region 323 are sequentially arranged along the second direction Y, and the second non-adhesive region 312, the first adhesive region 311, and the third non-adhesive region 313 are sequentially arranged along the second direction Y. When the electrochemical apparatus 100 is subjected to impact, this facilitates suppressing the movement of the electrode assembly 20 relative to the housing 10 along the second direction Y and reducing the impact on the corners of the housing 10 and the impact on the electrode assembly 20 close to the head portion 101 and tail portion 102, thereby facilitating reducing the risk of damage to the housing 10 and short circuits in the electrochemical apparatus 100.

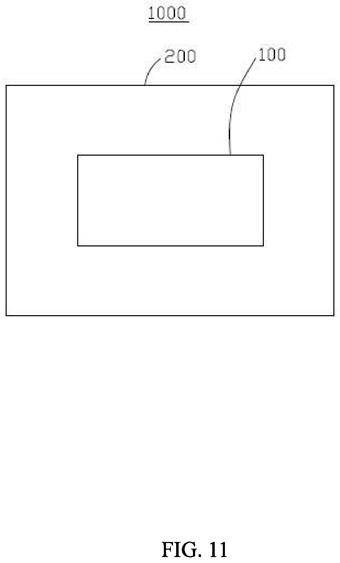

Referring to FIG. 11, some embodiments of this application also provide an electric device 1000, and the electric device 1000 includes the electrochemical apparatus 100 described above.

In some embodiments, referring to FIG. 11, the electric device 1000 further includes a device body 200, and the electrochemical apparatus 100 is installed in the device body 200 and is configured to supply power the device body 200.

In some embodiments, the electric device 1000 may be a Bluetooth headset, a Bluetooth speaker, a mobile phone, a laptop, a tablet, an electronic book player, an electric toy, a game console, a video recorder, a portable recorder, a radio, a smart watch, a lighting lamp, a calculator, or the like, which are not enumerated herein.

Since the electric device 1000 adopts the technical solutions of any of above embodiments of the electrochemical apparatus 100 and therefore has at least the beneficial effects brought by the technical solutions of any one of above embodiments of the electrochemical apparatus 100. Details are not repeated herein.

In addition, those of ordinary skill in the art should be aware of that the above embodiments are for description of this application only but not for limiting this application. Any modification, equivalent replacement, or improvement made without departing from the spirit and principle of this application shall fall within the protection scope of this application.

## Claims

1. An electrochemical apparatus, comprising:
a housing, comprising a first sidewall, the first sidewall comprising a first surface and a second surface opposite each other along a first direction, wherein the first surface is located inside the housing, and the second surface is located outside the housing;
an electrode assembly, disposed within the housing, and the electrode assembly comprising a first side surface adjacent to the first surface;
a first adhesive member, located between the housing and the electrode assembly, the first adhesive member comprising a first side portion and a second side portion opposite each other, wherein the first side portion comprises a first adhesive region bonded to the first surface, and the second side portion comprises a second adhesive region, a first non-adhesive region, and a third adhesive region sequentially arranged along a second direction, the second adhesive region and the third adhesive region are bonded to the first side surface, and the second direction are perpendicular to the first direction; along the first direction, a projection of the first non-adhesive region overlaps with a projection of the first adhesive region; and
a second adhesive member, bonded to the second surface, and the second adhesive member being configured to bond to an external structure.

2. The electrochemical apparatus according to claim 1, wherein the first side portion further comprises a second non-adhesive region and a third non-adhesive region, and along the second direction, the first adhesive region is located between the second non-adhesive region and the third non-adhesive region; and
along the first direction, a projection of the second non-adhesive region overlaps with the second adhesive region, and a projection of the third non-adhesive region overlaps with the third adhesive region.

3. The electrochemical apparatus according to claim 2, wherein along the first direction, the projection of the first non-adhesive region covers the projection of the first adhesive region, the projection of the second non-adhesive region covers the second adhesive region, and the projection of the third non-adhesive region covers the third adhesive region; and
along the second direction, a distance between the first adhesive region and the second adhesive region is greater than 0, and a distance between the first adhesive region and the third adhesive region is greater than 0.

4. The electrochemical apparatus according to claim 3, wherein the electrochemical apparatus further comprises a first tab and a second tab having opposite polarities, and the first tab and the second tab are connected to the electrode assembly and extend out of the housing along the second direction.

5. The electrochemical apparatus according to claim 4, wherein the electrochemical apparatus satisfies at least one of the following conditions:
(1) along the second direction, a length of the electrode assembly is L, along a third direction, a width of the electrode assembly is W; the first direction, the second direction, and the third direction are perpendicular to each other, W < L, 30 mm ≤ L ≤ 150 mm, and 25 mm ≤ W ≤ 100 mm;
(2) along the second direction, the distance between the first adhesive region and the second adhesive region is D₁, and 0.5 mm ≤ D₁ ≤ 14 mm; and
(3) along the second direction, the distance between the first adhesive region and the third adhesive region is D₂, and 0.5 mm ≤ D₂ ≤ 14 mm.

6. The electrochemical apparatus according to any one of claims 1 to 5, wherein along the first direction, the projection of the first adhesive member overlaps with the projection of the second adhesive member.

7. The electrochemical apparatus according to claim 6, wherein along the first direction, the projection of the second adhesive member covers the projection of the first adhesive member.

8. The electrochemical apparatus according to claim 6 or 7, wherein along the second direction, the length of the electrode assembly is L, along the third direction, the width of the electrode assembly is W, wherein the first direction, the second direction, and the third direction are perpendicular to each other; along the first direction, the projection area of the first adhesive member is A, an overlapping area between the projection of the first adhesive member and the projection of the second adhesive member is S, and the electrochemical apparatus satisfies at least one of the following conditions:
(1)$0.4 \leq S / A \leq 1 ;$
(2) along the second direction, a length of the first adhesive member is L₁, and 0.4L ≤ L₁ ≤ 0.9L; and
(3) along the third direction, a width of the first adhesive member is W₁, and 0.4W ≤ W₁ ≤ 0.9W.

9. The electrochemical apparatus according to any one of claims 1 to 8, wherein the electrochemical apparatus satisfies at least one of the following conditions:
(1) the first adhesive member comprises a substrate layer, a first adhesion layer, a second adhesion layer, and a third adhesion layer, the first adhesion layer is connected to a surface of the substrate layer facing the housing, and the second adhesion layer and the third adhesion layer are connected to a surface of the substrate layer facing the electrode assembly; the first adhesion layer comprises the first adhesive region, the second adhesion layer comprises the second adhesive region, and the third adhesion layer comprises the third adhesive region; and
(2) the first adhesive member comprises a first single-sided adhesive, a second single-sided adhesive, and a third single-sided adhesive, the first single-sided adhesive comprises a first adhesive surface and a first non-adhesive surface opposite each other, the first adhesive surface comprising a fourth adhesive region, a fifth adhesive region, and the first adhesive region; the second single-sided adhesive comprises a second adhesive surface and a second non-adhesive surface opposite each other, the second adhesive surface comprising a sixth adhesive region and the second adhesive region, and the sixth adhesive region being bonded to the fourth adhesive region; and the third single-sided adhesive comprises a third adhesive surface and a third non-adhesive surface opposite each other, the third adhesive surface comprising a seventh adhesive region and the third adhesive region, and the seventh adhesive region being bonded to the fifth adhesive region.

10. The electrochemical apparatus according to claim 1, wherein the electrode assembly further comprises a second side surface, a third side surface, and a fourth side surface, the second side surface being opposite the first side surface along the first direction, and the third side surface being opposite the fourth side surface along the second direction; and at least one of the following conditions is satisfied:
(1) the second adhesive region is bonded to both the first side surface and the third side surface; and
(2) the third adhesive region is bonded to both the first side surface and the fourth side surface.

11. An electric device, comprising the electrochemical apparatus according to any one of claims 1 to 10.
